# EUROPEAN PATENT APPLICATION

(11) **EP 2 033 506 A2**
(43) Date of publication of application: **11.03.2009**
(21) Application number: 08161474.5
(22) Date of filing: 30.07.2008
(51) Int. Cl.: A01B 33/02

(54) **An agricultural tool with a dismountable motor**

(30) Priority: 06.09.2007 IT RE20070096
(71) Applicant: Eurosystems S.P.A., I-42045 Luzzara (Reggio Emilia) (IT)
(72) Inventor: Bovi, Fabio, 42045 Luzzara (Reggio Emilia) (IT)
(74) Representative: Corradini, Corrado

(57) **Abstract**

An agricultural tool comprising a frame (2), at least a work tool (30), a motor group (4) and means for joining (9) which dismountably join the motor group (4) to the frame (2); wherein the means for joining (9) comprise: two flanges (10,12) respectively fixed to the frame (2) and the motor group (4); an external locking ring nut (11) coupled to a first flange (10), and which screws up on a second flange (12), such as to press the flanges (10,12) axially into reciprocal contact; and anti-unscrewing means (114,118,128) comprising a flexible portion (114), with at least hooking tooth (118) which couples with a plurality of teeth (128) on the second flange (12), such as to be able to block the locking ring nut (11) in different angular portions.

## Description

The invention relates in general to agricultural tools which comprise a motor, typically an internal combustion engine, which is removably installed on-board the tool in order to be dismounted and remounted on other equipment of the same type.

In more detail, the present invention relates to agricultural tools which are designed to be driven and guided by a user proceeding on foot, and which are mainly suited to work on small areas of terrain, market gardens and gardens.

As is known, agricultural tools of this type generally comprise a rigid support frame, which is provided with a handlebar which is gripped by the user in order to guide and drive the machine, and on which at least a work tool is installed which will go into contact with the terrain in order to perform a task.

The work tool is activated by a motor group, also installed on-board the support frame, which usually comprises an internal combustion engine and a tank for the fuel.

The internal combustion engine is generally provided with a regulating organ which varies the rotation speed, typically a butterfly valve for regulating the air-fuel mixture ratio in the carburettor, which is managed by a special manual command, for example a rotating knob or a lever, which is fixed on the handlebar of the agricultural tool, and which is mechanically connected to the regulating organ by a flexible steel cable.

A manual electric switch is also usually mounted on the handlebar of the agricultural tool, which switch is selectively destined to act on the electric motor ignition circuit, such as to stop the motor.

A typical electrical ignition circuit for an internal combustion engine comprises a current generator, for example a battery or a permanent-magnet dynamo, which supplies a distributor which distributes the electrical current to the sparking-plugs, such as to create the spark necessary for causing combustion in the cylinders. Between the current generator and the distributor, the ignition circuit generally comprises an earthed electrical cable, typically earthed via the metal body of the engine, which is intercepted by the above-mentioned manual switch located on the handlebar. In this way, when the switch is open, the current generator is effectively able to supply the sparking-plugs; when the switch is closed, the current generator is in short circuit on the earthing and is not able to supply the sparking-plugs, thus causing the motor to shut down.

To enable the users to perform various tasks on the terrain with only low investment costs, agricultural tools have been provided in which the motor group is removably installed on the support frame by means of rapidly-mounted and dismounted junction means, such as to be able to be mounted and remounted on a plurality of agricultural tools equipped with different work tools.

In particular, the junction means normally comprise two connecting flanges which are respectively fixed to the support frame and the motor group, and an external locking ring nut, which is rotatably coupled idle and axially constrained to a first of the connecting flanges, and screws up on the second connecting flange, such as to press the connecting flanges axially into reciprocal contact, blocking the motor group on the support frame.

It is specified that screwing up the locking ring nut on the second connecting flange is intended in the general sense, i.e. the screwing-up can be realised with any coupling that means that a rotation of the locking ring nut corresponds to an axial displacement thereof with respect to the second connecting flange.

Anti-unscrewing means are further associated to the locking ring nut, which block the ring nut in a predetermined angular position with respect to the second connecting flange, such as to prevent the loosening of the axial lock between the two connecting flanges.

The anti-unscrewing means generally comprise a pawl fashioned in the locking ring nut, which projects radially towards the inside in order to couple with a corresponding radial seating afforded in the second connecting flange, when the locking ring nut reaches the predetermined angular blocking position.

A drawback of the present solution consists however in the fact that when the pawl engages in the corresponding seating, the entity of the axial locking force exerted by the ring nut on the connecting flanges inevitably depends on the size tolerances of the involved parts.

It can therefore happen that although the defined locking position is reached by the anti-unscrewing means, the locking ring nut exerts an axial force which is insufficient to guarantee the blockage of the connecting flanges to one another on the reciprocal contact plane.

For the same reason, it can also happen that a same locking ring nut is able to stably fasten the relative motor group on a determined agricultural tool, but is not able to do the same with one or more of the other agricultural tools in the range, which completely ruins the whole idea of inter-changeability of the motor group.

An aim of the present invention is to enable mounting and dismounting of the motor group from an agricultural tool by means of a rapid, effective system which enables the drawbacks in the prior art to be overcome.

A further aim of the invention is to reach the above-mentioned objective in the ambit of a simple, rational and relatively inexpensive solution.

These aims are attained by the characteristics of the invention as reported in the independent claims. The dependent claims delineate preferred and/or particularly advantageous aspect of the invention.

In particular, the invention makes available an agricultural tool comprising a support frame on which is installed at least a work tool, a motor group for activating the work tool located on the support frame in order to carry out a work operation on the terrain, and means for joining which dismountably join the motor group to the support frame. The means for joining comprise two connecting flanges, respectively fixed to the support frame and the motor group; an external locking ring nut, which is rotatably coupled idle and is axially constrained to a first of the connecting flanges, and which screws up on the second connecting flange, such as to press the connecting flanges axially into reciprocal contact; and anti-unscrewing means which prevent an unscrewing of the locking ring nut with respect to the second connecting flange.

With the invention, the anti-unscrewing means comprise a flexible portion of the locking ring nut, which flexes in a radial direction and is provided with at least a radially-developing hooking tooth which couples with a plurality of radially-developing teeth which are fashioned and distributed circumferentially on the second connecting flange, such as to be able to block the locking ring nut in a plurality of different angular positions with respect to the second connecting flange.

Thanks to this solution, the locking ring nut can always be screwed up on the second connecting flange up until it exerts an axial locking force which is sufficient to solidly fix the motor on the support frame, taking up any size differences due to the working tolerances, and can thus be effectively blocked by the anti-unscrewing means in any angular position reached.

In a preferred aspect of the invention, each connecting flange is provided with front teeth which couple with corresponding front teeth fashioned in the other connecting flange, such as to prevent the reciprocal rotation of the connecting flanges on the contact plane.

In this way, the fixing of the motor group on the support frame is stabler and more secure, and further requires a smaller locking force on the part of the ring nut, as it is not necessary to create strong frontal friction between the connecting flanges.

To enable a simple and rapid mounting/dismounting of the motor group with respect to the support frame, a further aspect to consider is that the internal combustion engine is joined to the support frame also by means of the steel cable connecting the butterfly valve to the manual accelerator control, and also via the electric cable which connects the ignition circuit to the electric switch which turns off the motor.

In the prior art, the operations required for connecting and disconnecting the internal combustion engine from the cables of the accelerator and the switch are generally very slow and laborious.

In order to overcome this drawback, the invention makes available a new connecting device between the internal combustion motor and the manual controls for controlling the functioning of the motor.

The device comprises a base body to which a mobile group is slidably coupled, which moves with alternating motion with respect to the base body. The mobile group comprises a first hook seating for a first extension cable which will be connected to an organ of the motor, which regulates the rotation speed of the motor itself, and a second hook seating for a second extension cable which will be connected with a manual control of the accelerator, such that the manual control can manage the regulating organ of the motor through the first and second extension cables joined to the mobile equipment. The following are also installed on the base body of the connecting device: a first electric line having a first terminal which will be electrically connected to the electric ignition circuit of the motor, and a second terminal associated to the second hook seating of the mobile equipment, such as to be in contact with the second extension cable; and a second electric line having a first terminal which will be electrically earthed, and a second terminal which will be electrically connected to an electrical connecting cable, which is located in electrical connection with the second extension cable via a manual switch.

Thanks to this solution, simply by hooking-up or unhooking the second extension cable, it is effectively and rapidly possible to separate or connect the internal combustion motor to and from the manual command of the accelerator and the manual cut-off switch.

To make the connecting device more compact and functional, a preferred embodiment of the invention includes the first electrical line comprising the mobile equipment, which is at least partially made of a conductor material, a contrast spring installed in the base body and destined to stay in contact with the mobile equipment, such as to push it constantly towards a predetermined endrun position, and a conductor located in contact with the contrast spring and fixed to the base body.

In a preferred aspect of the invention, the base body of the connecting device comprises a blocking seating for a sheath in which the second extension cable is inserted; the second terminal of the second electrical line being located at the blocking seating, such as to be able to come into contact with a conductor which is fixed on the guide sheath, and it is electrically connected to the electrical connecting cable.

In this way, by hooking/unhooking only the second extension cable from the connecting device, with the relative guide sheath, the electrical connecting cable is automatically unhooked, thus realising, in a single move and very simply and rapidly, the separations/connection of the internal combustion engine with respect to both the accelerator control and the electrical cut-off switch.

Further characteristics and advantages of the invention will better emerge from a reading of the following description, which is provided by way of nonlimiting example, with the aid of the figures of the drawings, in which:
figure 1 is a lateral view of an agricultural tool of the invention;
figure 2 is a back view of the agricultural tool of figure 1;
figure 3 is the section line III-III of figure 2, shown in enlarged scale;
figure 4 is an exploded view in perspective elevation of the means for joining the motor group and the support frame of the machine of figure 1;
figure 5 is a section view along line V-V of figure 7;
figure 6 is an enlarged detail of figure 3;
figure 7 is section line VII-VII of figure 5;
figure 8 is a device for connecting the motor to the manual control organs of the motor;
figure 9 is the connecting device of figure 8 without the closing cover;
figure 10 is a view along section line X-X of figure 9;
figure 11 is an exploded view in perspective elevation of figure 8;
figure 12 is a schematic view of the electrical ignition circuit of the motor installed on the tool of figure 1.

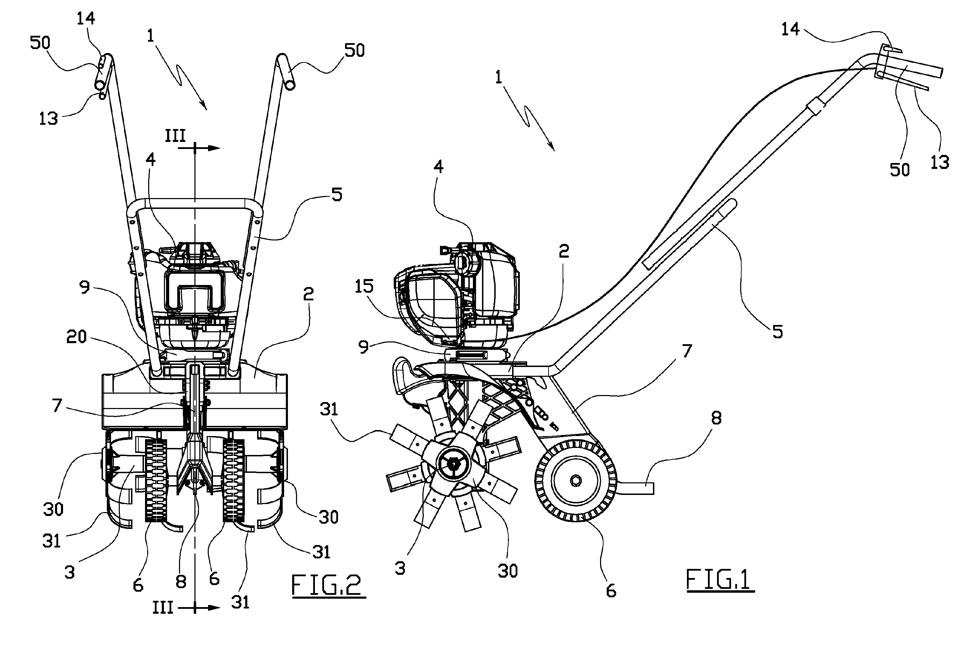

Figures 1 and 2 illustrate a motor-hoe 1 for performing a hoeing and/or weeding operation of a small area of terrain, typically inside a market garden or a garden, for example for preparing the terrain for the following sowing operations.

The motor-hoe 1 comprises a rigid support frame 2, on which a horizontal-axis rotating shaft 3 is installed, bearing four tiller bars 30 keyed thereon, which bars 30 go into direct contact with the terrain to perform the work operation. Each tiller bar 30 comprises a central connecting hub with the rotating shaft 3, and a plurality of radial cutters 31 having a curved end.

A handlebar 5 is also installed on the support frame 2, which handlebar 5 is located in the back part of the motorhoe 1, where it is inclined in an upwards direction in order to provide two grips 50 to be held by a user in order to control and guide the motor-hoe 1 on the terrain. The handlebar 5 can be length-adjusted such as to position the grips 50 at a different height according to the needs and/or the preferences of the user.

The support frame 2 further comprises an oscillating arm 7 which at an end thereof bears a pair of support wheels 6, which go into contact with the terrain in order to facilitate displacements of the motor-hoe 1 when the tiller bars 30 are still, and are raised from the ground during the working process, when the tiller bars 30 are in motion.

A rest element 8 is present at the oscillating arm 7, which is fixed to the support frame and goes into contact with the terrain during working thereof, such as to define the position of the centre of gravity of the motor-hoe 1 with respect to the rotation axis of the tiller bars 30. The depth of working of the tiller bars 30 depends on the position of the centre of gravity; if the centre of gravity is displaced forwards, the tiller bars 30 tend to advance the motor-hoe 1 without cutting into the ground, while if the centre of gravity is displaced backwards the tiller bars 30 tend to cut deep, consequently keeping the motor-hoe 1 stationary.

The rotating shaft 3 of the motor-hoe 1 is activated by a motor group, denoted overall by 4, which is installed on-board the support frame 2 above the tiller bars 30, and generally comprises an internal combustion engine, typically a petrol engine, and the relative fuel tank.

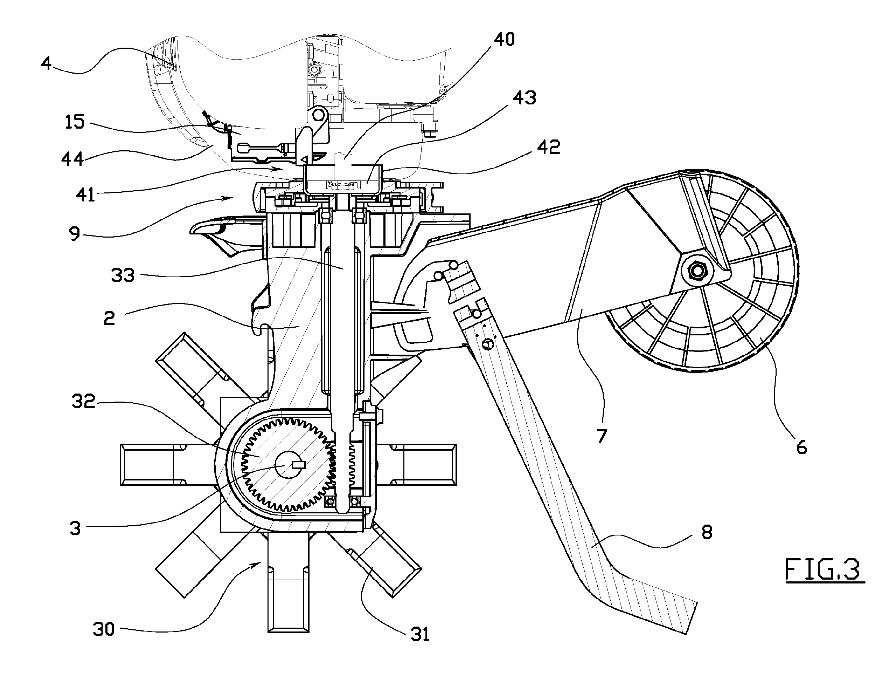

As illustrated in figure 3, the rotating shaft 3 is connected to the motor group 4 by a transmission system comprising a cogwheel 32 keyed on the rotating shaft 3 and a vertical-axis worm screw 33 which enmeshes with the cogwheel 32 and is rotatably installed on the support frame 2. The worm screw 33 projects from the top of the support frame 2, where it is coupled to the drive shaft 40 of the motor group 4 by means of a centrifuge clutch mechanism, denoted in its entirety by 41.

The clutch mechanism 41 comprises a beaker-shaped body 42 keyed on the worm screw 33, internally of which a plurality of jaws 43 are housed, which are rotatingly solid with the drive shaft 40, and perform a radial movement activated by centrifugal force.

When the drive shaft 40 rotates at a speed of above a certain threshold, the centrifugal force tends to radially distance the jaws 43 from the rotation axis in contrast with a respective recall spring (not visible), up until it presses them against the internal wall of the beaker-shaped body 42, such as to draw the worm screw 33 in rotation and activate the tiller bars 30. Below the said threshold, the recall springs keep the jaws 43 distant from the internal wall of the beaker-shaped body 42, such that the worm screw 33 and the tiller bars 30 remain stationary.

In this way, the internal combustion engine of the motor group 4 can be kept functioning, at low revolutions, even when the tiller bars 30 have to remain still.

According to the invention, the motor group 4 is installed on the support frame 2 by connecting-up means, denoted in their entirety by 9, which enable the motor group 4 to be mounted and dismounted, in a very simple, rapid and efficient way.

This characteristic advantageously enables a same motor group 4 to be mounted on a plurality of agricultural tools equipped with different tools and designed to perform different agricultural tasks. For example, the motor group 4 can be dismounted from the motor-hoe 1 and installed on an agricultural tool provided with blades for lawn-mowing.

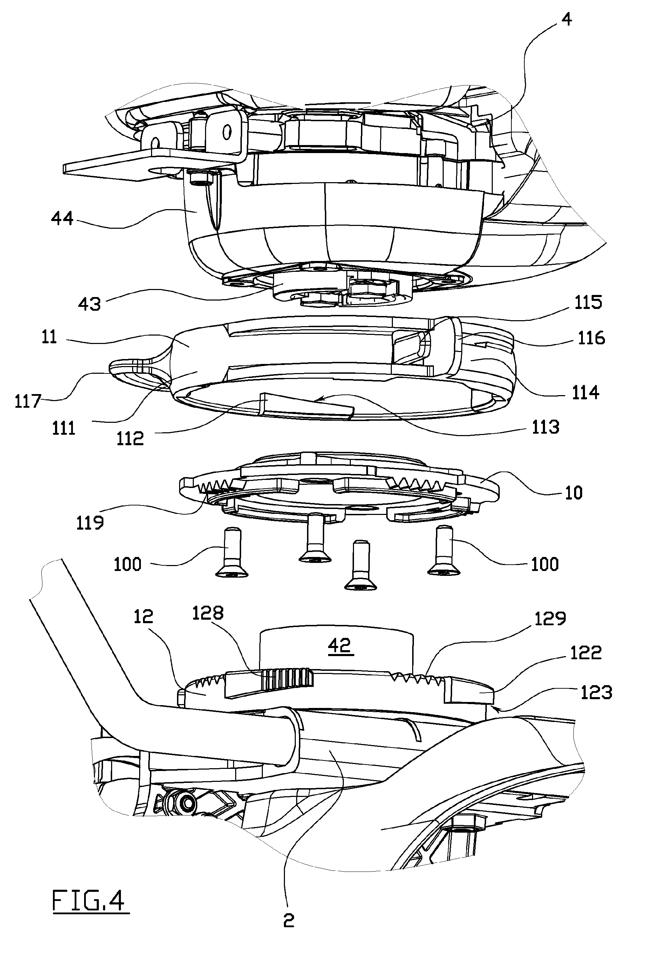

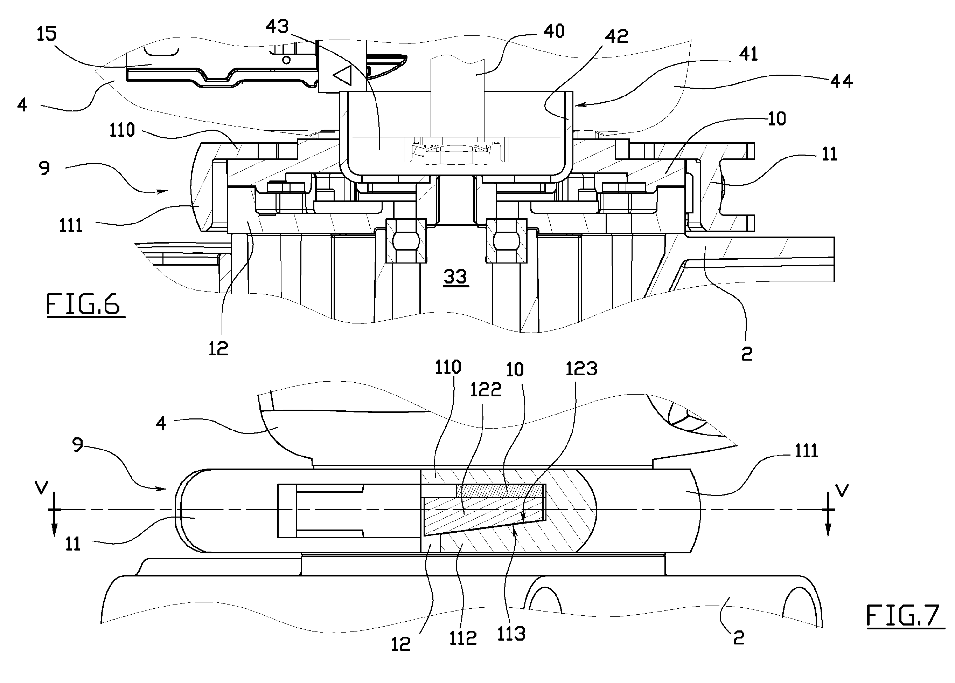

As illustrated in figure 6, the connecting-up means comprise a first connecting flange 10 having a generally annular shape, which surrounds the drive shaft 40 and is solidly fixed by a plurality of screws 100 to the casing 44 of the motor group 4 (see also figure 4).

The first connecting flange 10 is in turn surrounded by an external locking ring nut 11, which is provided with a circumferential abutment 110 which projects internally and rests on the first connecting flange 10, in the space comprised between the flange 10 and the overlying casing 44 of the motor group.

In this way, the locking ring nut 11 is free to rotate about the axis thereof with respect to the first connecting flange 10, and is also axially constrained thereto, with respect to which it is free to perform at most small axial displacements due to the play between the abutment 110 and the space available between the flange 10 and the casing 44.

The connecting-up means 9 further comprise a second connecting flange 12 having a generally annular shape, which is fixed to the support frame 2 where it surrounds the worm screw 33.

The second connecting flange 12 has substantially the same diameter as the first connecting flange 10, and the flanges are destined to be frontally in contact with one another.

In particular, the first connecting flange 10 is further provided with four groups of front teeth 119 (see figure 4) which couple with corresponding groups of front teeth 129 fashioned on the second connecting flange 12, such as to prevent reciprocal rotation of the flanges 10, 12 on the contact plane.

When the connecting flanges are in reciprocal contact, the lateral annular wall 111 of the locking ring nut 11 advances axially over the first connecting flange 10, such as to surround the second connecting flange 12 too.

As illustrated in figure 4, four identical cam organs 112 project radially from the internal surface of the lateral wall 111 towards the inside, which cam organs 112 are angularly equidistanced around the axis of the locking ring nut 11, and exhibit a circumferential development which is in general terms wedge-shaped, providing an inclined upper surface 113.

In particular, all the upper surfaces 113 of the cam organs 112 have a same inclination with respect to the axis of the locking ring nut 11.

The second connecting flange 12 in turn exhibits four cam organs 122 which are angularly equidistanced about the axis of the flange, which project radially towards the outside, and exhibit a circumferential development which is in general terms wedge-shaped, and which provides an inclined lower surface 123.

All of the lower surfaces 123 of the cam organs 122 have an inclination with respect to the second connecting flange 12 which coincides with the inclination that the upper surfaces 113 of the cam organs 112 have with respect to the axis of the locking ring nut 11.

During assembly, the cam organs 112 of the locking ring nut 11 are made to pass axially into the empty spaces comprised between the cam organs 122 of the second connecting flange 12, such as to position them at a lower height with respect to the flange 12, i.e. on the opposite side with respect to the circumferential abutment 110 which rests on the first connecting flange 10 (see also figure 7).

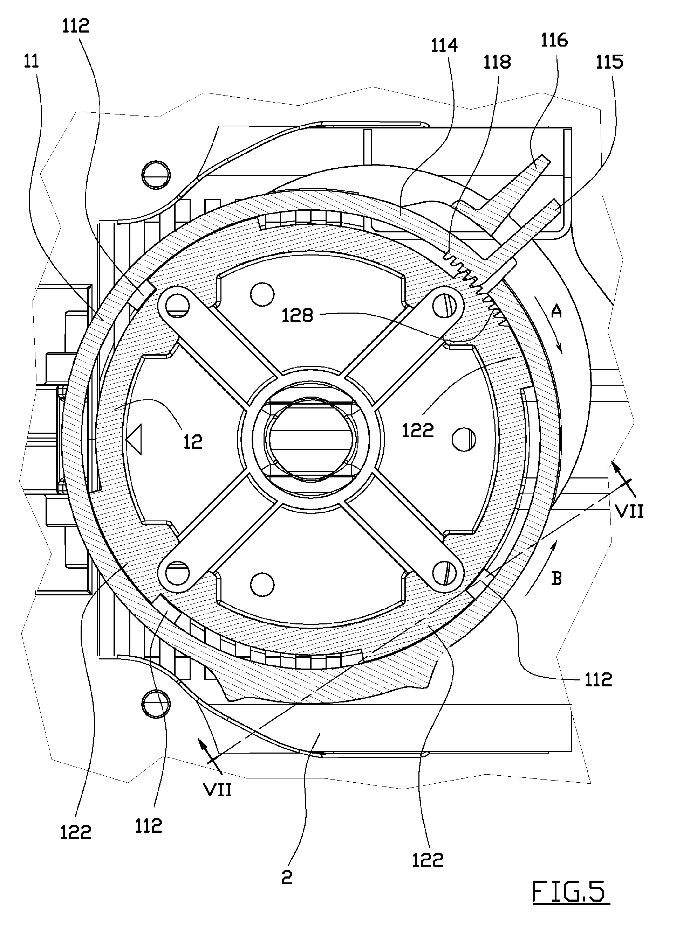

At this point, the locking ring nut 11 is rotated in the tightening direction A indicated in figure 5, such as to bring the inclined surface 113 of each cam organ 112 into contact with the inclined surface 123 of a respective cam organ 122 of the second connecting flange 12.

Thanks to this coupling, each further rotation of the locking ring nut 11 in the tightening direction A produces reciprocal wedging of each cam organ 112 with a relative cam organ 122, such that an axial movement of the locking ring nut 11 corresponds to the rotation, which consequently axially presses the first connecting flange 10 frontally against the second connecting flange 12.

In the present description, this coupling is considered in general terms as a fastening of the locking ring nut 11 on the second connecting flange 12.

As illustrated in figure 4, the body of the locking ring nut 11 comprises a flexible portion 114 conformed as a circumferential strip, which is comprised between two rigid annular portions, and is fixed only at an end, such as to be able to flex radially in a perpendicular plane to the axis of the locking ring nut 11.

The free end of the flexible portion 114 exhibits a tongue 115 projecting externalwise, which is gripped by a user to cause the flexion of the flexible portion 114.

At the position of the tongue 115, the locking ring nut 11 further exhibits a projecting ear 116 which is joined only to the rigid annular portion of the ring nut, and is located at the outside of the flexible portion 114, such as to function as an endrun for the flexional movement of the flexible portion 114.

The projecting ear 116 can also be gripped by a user, together with a second projecting ear 117, in order to perform the screwing and unscrewing of the locking ring nut 11 with respect to the second connecting flange 12.

As illustrated in figure 5, a plurality of hooking teeth 118 are fashioned on the internal surface of the flexible portion 114, which teeth 118 are substantially distributed along a tract of circumference which is centred on the axis of the locking ring nut 11, at the free end of the flexible portion 114.

When the connecting flanges 10, 12 are in reciprocal contact, the hooking teeth 118 are placed at the same height of the cam organs 122 of the second connecting flange 12, and couple with a plurality of corresponding radially-developing blocking teeth 128, which are fashioned on the lateral surface of one of the cam organs 122 (see also figure 4) and are distributed substantially along a tract of circumference centred on the axis of the second connecting flange 12.

In particular, the sawtooth profile of the hooking teeth 118 and the blocking teeth 128 is conformed such as to prevent rotation of the locking ring nut 11 in the unscrewing direction B thereof, and to enable rotation thereof in the fastening direction A.

When the locking ring nut 11 is rotated in the fastening direction A, the contact between the teeth at the inclined edges thereof causes automatic flexion of the flexible portions 114, enabling the ring nut to be screwed up.

Thanks to this solution, the locking ring nut 11 can be effectively blocked with respect to the second connecting flange 12 in all the relative angular positions in which the coupling of at least a hooking tooth 118 is coupled with a corresponding locking tooth 128.

Thus the locking ring nut 11 can always be tightened on the second connecting flange 12 up until it exerts an axial locking force sufficient to fasten the motor group 4 on the support frame 2, taking up any sizing errors due to working tolerances, and can always be effectively blocked in the angular position thus reached by the coupling of the teeth 118 and 128, preventing any accidental unscrewing and thus any undesired loosening of the fastening.

In order to dismount the motor group 4, a user will simply have to flex the flexible portion 114 of the locking ring nut 11 towards the outside, such as to disengage the hooking teeth 118 from the blocking teeth 128, and then rotate the locking ring nut 11 in the unscrewing direction B before axially distancing the motor group 4 from the support frame 2.

It is observed that in this way the clutch joint 41 between the drive shaft 40 and the worm screw 33 is automatically disengaged, as the jaws 43 solidly constrained to the drive shaft 40 can freely disinsert from the beaker body 42 that is solidly constrained to the worm screw 33.

As illustrated in figure 1, the motor group 4 is thus separated from the support frame 2, but remains however connected to the manual controls which are installed on the handlebar 5 at the grips 50, and which control the functioning of the internal combustion engine during use.

The manual controls comprise an accelerator lever 13 which manages the movement of the butterfly valve regulating the air-fuel mixture in the carburettor, such as to vary the speed of rotation of the internal combustion engine of the motor group 4, and further comprise an electrical lever switch 14, which cuts out the internal combustion engine of the motor group 4, by acting on the electrical ignition circuit thereof.

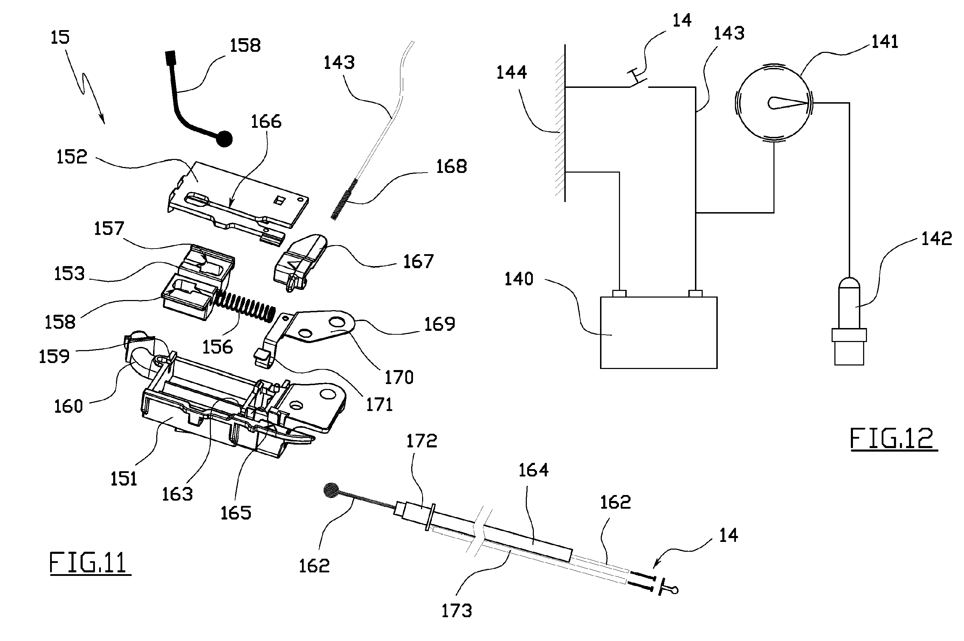

As is schematically illustrated in figure 12, the electrical ignition circuit comprises a current generator 140, for example a battery or a permanent magnet dynamo, which powers a distributor 141 which distributes the electrical current to the sparking-plugs 142 (or to the only sparking-plug in the case of a single-cylinder motor), such as to set off the spark to cause combustion in the motor cylinders.

Between the current generator 140 and the distributor 141, the ignition circuit comprises an earthing electric cable 143, which is earthed 144, typically to the metal casing of the engine, and is intercepted by the lever switch 14, such that when the lever switch 14 is open the current generator 140 can supply the sparking-plugs 142 and when the lever switch 14 is closed the current generator 140 is in short circuit and thus cannot supply the sparking-plugs 142, causing the engine to cut out.

According to the invention, the accelerator lever 13 and the lever switch 14 are connected to the motor group 4 by means of a connecting device 15, which is illustrated in detail in figures from 8 to 11.

The connecting device 15 comprises an external casing 150 generally in the form of a box, which is made of an electrically insulating material such as plastic, and is formed by a drawer body 151 closed by a flat lid 152.

The external casing 150 is screwed directly onto the metal casing 44 of the motor group 4 (see figures 1 and 3).

A mobile group 153 is housed internally of the casing 150, which is slidably coupled to the drawer body 151 such as to be free to slide in a straight direction, with an alternating motion between a first endrun wall 154 and a second endrun wall 155.

A helix spring 156 is interposed between the second endrun wall 155 and the mobile group 153, which is oriented in the sliding direction, such as to push the mobile group 153 constantly towards the first endrun wall 154.

A first hook-up seating 157 for a first steel extension cable 158 is afforded in the mobile group 153, which extension cable 158 is connected to the butterfly valve of the internal combustion engine. In particular, the first hook-up seating 157 comprises a straight gully oriented parallel to the sliding direction of the mobile group 153, and a broadening communicating with the gully. The first extension cable 158 is inserted in the gully such as also to be oriented in the sliding direction of the mobile group 153, and is provided with an end block which engages in the broadening, such as to prevent detachment of the first cable 158. The first extension cable 158 exits the casing 150 through an opening 159 afforded in the first endrun wall 154 and aligned with the gully of the hook-up seating 157, such as to insert in a dogleg conduit 160 which guides it towards the butterfly valve of the engine.

The first hook-up seating 157 and the opening 159 are laterally open towards the lid 152 of the casing, such as to enable hooking-up and unhooking of the first extension cable 158, by means of a transversal movement with respect to the sliding direction of the mobile group 153.

A second hook-up seating 161 is also afforded in the mobile group 153, for a second steel extension cable 162, which departs from the accelerator lever 13. In particular, the second hook-up seating 161 is entirely similar to the first hook-up seating 157, i.e. it comprises a broadening and a narrower straight gully which ends in the broadening, but the gully of the second hook-up seating 161 develops in an opposite direction with respect to that of the first hook-up seating 157. The second extension cable 162 is thus inserted in the gully such as to be oriented parallel and in an opposite direction with respect to the first extension cable 158, and is provided with an end block which engages in the broadening, such as to prevent it from coming free. The second extension cable 162 exits the casing 150 via an opening 163 made in the second endrun wall 155 and aligned with the gully of the hook-up seating 161, such as to insert in a flexible sheath 164 which guides it towards the accelerator lever 13.

In particular, the proximal end of the guide sheath 164 is received and blocked in a corresponding seating 165 of the external casing 150, which is afforded in the second end run wall 155 immediately downstream of the opening 163 from which the second extension cable 162 exits.

In this way, the longitudinal movement of the second extension cable 162, caused by the manual activation of the accelerator lever 13, produces, through the mobile group 153, a corresponding movement of the first extension cable 158, which acts on the position of the butterfly valve, thus enabling the user to manage the rotation speed of the engine via the lever of the accelerator 13.

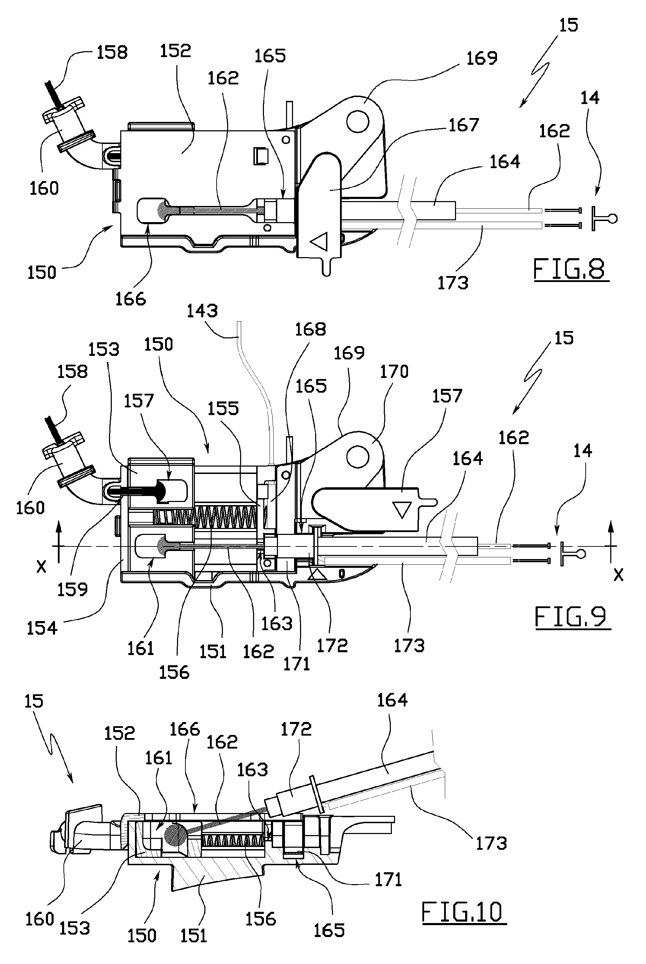

The second hook-up seating 161, the opening 163 and the seating 165 are laterally open towards the cover 152 of the casing, such as to enable the hooking-up and unhooking of the second extension cable 162, together with the relative guide sheath 164, by a single movement, transversal with respect to the sliding direction of the mobile group 153 (see figure 10).

In particular, as illustrated in figure 8, the cover 152 is designed to completely close the first hook-up seating 157 such as to prevent the unhooking of the first extension cable 158 when the casing 150 is mounted, while it is provided with a shaped opening 166 for leaving the second hook-up seating 161, the opening 163 and the seating 165 always open.

Finally, a blocking lever 167 is hinged to the external casing 150, which lever 167 can be manually displaced by a user between a first position (see figure 8), in which it laterally closes the seating 165 in order to block the guide sheath 164 internally thereof, and a second position (see figure 9), in which it leaves the seating 165 open.

As illustrated in figure 9, the connecting device 15 further comprises a first electrical line, a first terminal of which is realised by a platelet 168 of conductor material, which is installed fixed in the drawer body 151 of the casing 150, and is connected to the above-mentioned earth cable 143 of the electric engine ignition circuit.

The platelet 168 is in contact with the contrast spring 156, which is realised in a conductor material such as to constitute an element of the first electrical line.

The second terminal of the first electrical line is constituted by the mobile group 153, which is constantly in contact with the spring 156 and is made of a conductive material, preferably aluminium.

In this way, the second terminal of the first electrical line of the connecting device 15 is electrically connected to the second extension cable 162, through the anchor block thereof, which is made of a conductive material.

The connecting device 15 further comprises a second electrical line which is constituted by a single shaped platelet 169 made of a conductive material (see figure 11).

In particular, the shaped platelet 169 comprises a flat portion 170 which functions as a first electrical terminal, which is electrically earthed, for example in direct contact with the metal casing 44 of the engine; and further comprises a saddle-shaped portion 171 which functions as a second electric terminal, which is housed internally of the blocking seating 165 for the guide sheath 164.

In this way, the saddle portion 171 can contact a ring 172 made of a conductive material which is inserted at an end of the guide sheath 164.

The guide sheath 164 is made of a non-conductive material such as to prevent a direct electrical connection between the saddle portion 171 and the second extension cable 162.

The conductive ring 172 is in turn connected to an electrical connecting cable 173, which develops externally of the guide sheath 164 towards the grips 50 of the handlebar 5, where it is electrically connected with the second extension cable 162 via the above-mentioned lever switch 14.

In this way, if the lever switch 14 is open, the earth cable 143 of the electrical ignition circuit is isolated; if the lever switch 14 is closed, the earth cable 143 is earthed via the platelet 168, the spring 156, the mobile group 153 and the second extension cable 162, the connecting cable 173, the conductive ring 172 and the shaped platelet 169.

Thanks to the connecting device 15, the motor group 4 can be effectively separated and reconnected to the manual controls 13, 14 fixed on the handlebar 5, simply by unhooking and re-hooking, with a single act, the second extension cable 162 and the guide sheath 164, respectively from the second hook-up seating 161 of the mobile group 153 and the blocking seating 165 of the external casing 150.

In this way, the mechanical connection of the lever of the accelerator 13 is disconnected or reconnected with the butterfly valve, as well as the electrical connection of the lever switch 14 with the engine ignition circuit.

Obviously a technical expert in the sector might make numerous modifications of a technical and applicational nature, without forsaking the inventive idea as claimed herein below.

## Claims

1. An agricultural tool comprising a support frame (2) on which are installed:
at least a work tool (30), a motor group (4) for moving the work tool (30) in order to carry out a work operation on a terrain, and means for joining (9) which dismountably join the motor group (4) to the support frame (2); wherein the means for joining (9) comprise:
two connecting flanges (10, 12), respectively fixed to the support frame (2) and the motor group (4);
an external locking ring nut (11), which is rotatably coupled idle and axially constrained to a first connecting flange (10) of the connecting flanges (10, 12), and which screws up on a second connecting flange (12) of the connecting flanges (10, 12), such as to press the connecting flanges (10, 12) axially into reciprocal contact; and
anti-unscrewing means (114, 118, 128), which prevent an unscrewing of the locking ring nut (11) with respect to the second connecting flange (12),
**characterised in that** the anti-unscrewing means comprise a flexible portion (114) of the locking ring nut (11), which flexes in a radial direction and is internally provided with at least a radially-developing hooking tooth (118) which couples with a plurality of radially-developing teeth (128) which are fashioned and distributed circumferentially on the second connecting flange (12), such as to be able to block the locking ring nut (11) in a plurality of different angular positions with respect to the second connecting flange (12).

2. The tool of claim 1, **characterised in that** the flexible portion (114) of the locking ring nut (11) comprises a plurality of the radially-developing teeth (118), which are distributed circumferentially and are destined to couple with the teeth (128) of the second connecting flange (12).

3. The tool of claim 1, **characterised in that** the at least a tooth (118) of the locking ring nut (11) and the teeth (128) of the second connecting flange (12) are conformed such that the coupling thereof prevents rotation of the locking ring nut (11) in an unscrewing direction (B), and enables rotation thereof in an opposite fastening direction (A).

4. The tool of claim 1, **characterised in that** the flexible portion (114) of the locking ring nut (11) is a circumferentially-developing strip which flexes in a perpendicular plane to an axis of the locking ring nut (11).

5. The tool of claim 1, **characterised in that** each of the connecting flanges (10, 12) is provided with front teeth (119, 129) which couple with corresponding front teeth fashioned in the other of the connecting flanges (10, 12), such as to prevent a reciprocal rotation of the connecting flanges (10, 12) on a contact plane thereof.

6. The tool of claim 1, **characterised in that** the first connecting flange (10) is fixed to the motor group (4) and the second connecting flange (12) is fixed to the support frame (2).

7. The tool of claim 1, **characterised in that** the motor group (4) comprises a drive shaft (40) which is removably connected by means of a clutch joint (41) with the work tool (30) installed on the support frame (2).

8. A connecting device of an internal combustion engine to manual controls for controlling the engine, **characterised in that** it comprises a base body (150) to which a mobile group (153) is coupled, which moves alternatingly with respect to the base body (150), the mobile group (153) comprising a first hook-up seating (157) for a first extension cable (158) which is to be connected to an organ of the engine for regulating a rotation speed of the engine, and a second hook-up seating (161) for a second extension cable (162) which is to be connected to a manual control (13) such that the manual control (13) is able to manage the regulating organ of the engine via the first and second extension cables (158, 162) joined to the mobile group (153), the following also being installed on the base body (150):
a first electrical line having a first terminal (168) which is electrically connected with the electrical ignition circuit of the engine, and a second terminal (171) being associated to the second hook-up seating (161) of the mobile group (153) such as to be in contact with the second extension cable (162), and
a second electrical line having a first terminal (170) destined to be electrically connected to an earth, and a second terminal (171) destined to be electrically connected to an electrical connecting cable (173), which electrical connecting cable (173) is in electrical connection with the second extension cable (162) via a manual switch (14).

9. The device of claim 8, **characterised in that** the first electrical line comprises the mobile group (153), which is at least partially made of a conductive material, a contrast spring (156) installed in the base body (150) and destined to be in contact with the mobile group (153) such as to push the mobile group (153) towards a predetermined endrun position, and a conductor (168) placed in contact with the contrast spring (156) and fixed to the base body (150).

10. The device of claim 8, **characterised in that** the base body (150) comprises a seating (165) for blocking a sheath (164) in which the second extension cable (162) is inserted, and **in that** the second terminal (171) of the second electrical line is located at the blocking seating (165) such as to be in contact with a conductor (172) which is fixed to the sheath (164) and which is electrically connected to the connecting cable (173).

11. The device of claim 8, **characterised in that** the base body (150) comprises a containing casing internally of which the mobile group (153) is slidably housed, the containing casing being provided with at least an opening (166) communicating with the second hook-up seating (161) of the mobile group (153), such as to enable hooking-up and unhooking of the second extension cable (162).

12. An agricultural tool comprising a support frame (2) on which are installed: at least a work tool (30), and an internal combustion engine removably mounted on the support frame (2) and destined to move the work tool (30), **characterised in that** it comprises a connecting device (15) according to any one of claims from 8 to 11, wherein the base body (150) is fixed to the engine, the first hook-up seating (157) of the mobile group (153) is hooked to a first extension cable (158) connected to an organ of the engine which regulates a speed of rotation of the engine, the second hook-up seating (161) of the mobile group (153) is hooked to a second extension cable (162) connected to a manual control (13) fixed to the support frame (2), the first terminal (168) of the first electrical line is connected to the ignition circuit of the engine, the first terminal of the second electrical line is earthed, and the second terminal (171) of the second electrical line is electrically connected to an electrical connecting cable (173), which is located in electrical connection with the second extension cable (162) via a manual switch (14) installed on the support frame (2).

13. The tool of claim 12, **characterised in that** the support frame (2) comprises a handlebar (5) provided with at least a grip (50) for being gripped by a user in order to guide the tool on a terrain, and **in that** the manual control (13) and the manual switch (14) are fixed to the handlebar (5) at a same position as the grip (50).
